# EUROPEAN PATENT SPECIFICATION

(11) **EP 1 087 191 B1**
(45) Date of publication and mention of the grant of the patent: **11.08.2004**
(21) Application number: 00308309.4
(22) Date of filing: 22.09.2000
(51) Int. Cl.: F25B 39/02, B23K 1/00

(54) **A refrigerant distributor and a method and an apparatus for fabricating the same**
Kältemittelverteiler und Verfahren sowie Vorrichtung zu dessen Herstellung
Un distributeur de réfrigerant ainsi qu'un procédé et un dispositif pour sa fabrication

(30) Priority: 22.09.1999 JP 26805399; 30.03.2000 JP 2000094361
(43) Date of publication of application: 28.03.2001
(73) Proprietor: MITSUBISHI DENKI KABUSHIKI KAISHA, Tokyo 100-8310 (JP)
(72) Inventor: Nakadeguchi, Shinji, c/o Mitsubishi Denki K.K., Tokyo 100-8310 (JP); Hisamori, Youichi, c/o Mitsubishi Denki K.K., Tokyo 100-8310 (JP); Murayama, Hideyuki, c/o Mitsubishi Denki K.K., Tokyo 100-8310 (JP); Nakayama, Masahiro, c/o Mitsubishi Denki K.K., Tokyo 100-8310 (JP); Tanigawa, Tsukasa, c/o Mitsubishi Denki K.K., Tokyo 100-8310 (JP); Hatamura, Yasunori, c/o Mitsubishi Denki K.K., Tokyo 100-8310 (JP); Morimoto, Osamu, c/o Mitsubishi Denki K.K., Tokyo 100-8310 (JP); Miyamoto, Yoshinori, c/o Mitsubishi Denki K.K., Tokyo 100-8310 (JP)
(74) Representative: Godwin, Edgar James

(56) References cited:
- EP-A- 0 764 493
- DE-U- 9 006 649
- US-A- 2 193 696
- US-A- 3 030 782
- US-A- 3 942 703
- US-A- 5 243 838
- US-A- 5 657 923

## Description

The present invention relates to the refrigerant distributor used for air-conditioners and fabricating method thereof.

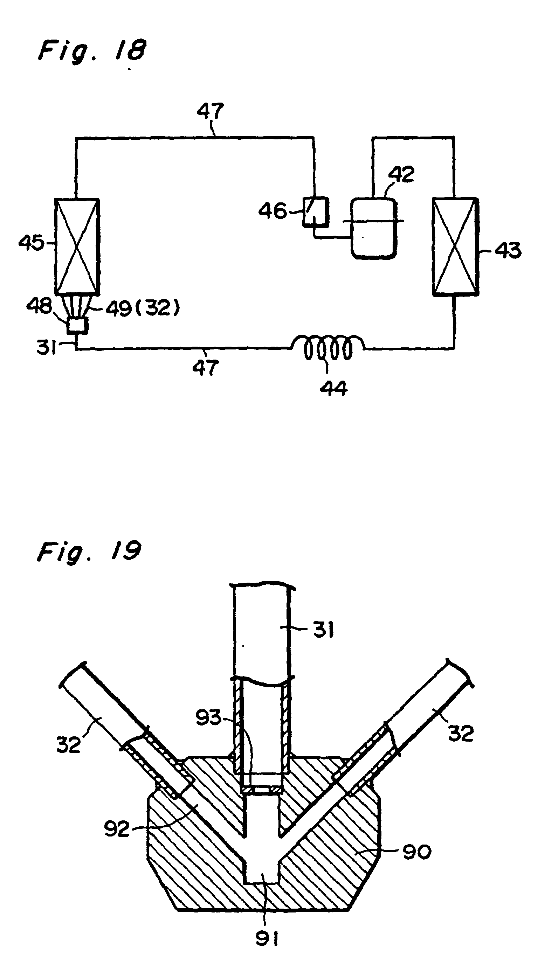

For one example of a refrigerant circuit of an air-conditioner, as shown in Fig. 18, the refrigerant circuit comprises a compressor 42, a condenser 43, a pressure reducer 44, a distributor 48, an evaporator 45, and an accumulator 46, and these components are connected with refrigerant pipes in series, so as to circulate a refrigerant in this circuit, for example, as described in Japanese Patent Publication No. 2-17368.

In the refrigerant flow circuit, a refrigerant is gas having high temperature and high pressure when discharged by the compressor 42, then, condensed into a high-pressure liquid by exchanging heat with air during passing the condenser 43. Then, the refrigerant rapidly is expanded to reduce the pressure during passing the pressure reducer 44 into a low-pressure gas-liquid refrigerant, and then is distributed by the distributor 48 to be sent to a plurality of the refrigerant evaporating passages disposed in the evaporator 45. In the evaporator 45, the refrigerant is evaporated into low-pressure gas by exchanging heat with air flow which is cooled. This low-pressure gas refrigerant is sucked into the compressor 42 via the accumulator 46, which achieves the refrigeration cycle by being compressed and discharged again.

The distributor 48 in the above refrigerant circuit delivers the refrigerant from the pressure reducer 44 to a plurality of refrigerant tubes within the evaporator 45 through the distributing tubes 49. The distributor 48 is a part for homogenizing the refrigerant without separation of a liquid phase and a gas phases, and for supplying an uniform dispersed composition of the low-pressure two-phase refrigerant into the evaporator.

A conventional distributor is disclosed, for example, in Japanese Patent Publication No. 8-75314, as shown in Fig. 19, which comprises a cylindrical distributing body 90, a refrigerant supply hole 51 bored in the body 90 with one end sealed, and a plurality of distribution holes 92 bored in the distributing body 90 around the refrigerant supply hole 91 and connected to the same hole 91. A refrigerant supply tube 31 inserted in, and connected to, the refrigerant supply hole 93 is connected to the pressure reducer 44, while distributing tubes are connected to the distribution holes 92 and connected to evaporating tube assembly within the evaporator 45.

Conventionally, in the midway of the refrigerant supply hole 91, an orifice ring 93 is inserted to throttle a passage for the refrigerant in the gas-liquid mixed state. The refrigerant which passes the refrigerant supply tube 31 and flows into the distributing body 90 of the distributor is given pressure drop in this position, and then uniformly mixed into the gas and liquid dispersed phases. The uniformly gas-liquid mixed refrigerant is divided into a plurality of flows and enters each of the distributing tubes 32, and is delivered to the evaporating tubes.

This kind of distributor can be fabricated by inserting the refrigerant supply tube 31 and many distributing tubes 32 into the corresponding holes and the orifice ring 93 into the distributing body 90 formed by machining. And, thereafter, these pipes are brazed to the distributing body by flame heating using a gas torch.

The conventional distributor is designed to uniformly mix the gas-liquid phase refrigerant in a mist by means of the orifice ring 93 attached in the interior of the refrigerant supply hole 91, but could not always achieve uniform mixture of the gas to the liquid particularly in the case of the liquid and gas fractions varying. As a result, the refrigerant with the liquid and gas separated phases has often been distributed to each distributing tubes 32, degrading uniform separation performance. In addition, when the refrigerant pipe 47 has a bend right before the distributor, the liquid portion of the refrigerant is transported with displacement to the wall side, and therefore, the liquid phase and the gas phase separated are delivered to the distributing tubes 32, resulting in deterioration of uniform distribution performances.

In addition, the conventional distributor was limited to the number of distributing tubes to be assembled because a number of refrigerant distribution holes 92 in communication with the deep section of the refrigerant supply hole 91 must be arranged radially in the narrow limited area around to the refrigerant supply hole 91 bored at the center of the distributing body 90.

In the brazing operation, overheating of the body or oversupply of the brazing material allows the brazing material to enter the supply hole 91 and distribution holes 92 through a clearance in brazed portions, for example, clearances between the supply hole 91 and the refrigerant supply tube 31 or between the distributing tubes 32 and the distribution holes 92, and such molten brazing material have a risk of clogging the throttled section in the orifice ring 93 or narrow distribution holes 52. Overheating might cause the supply hole configuration to deform, which degrade the distribution capabilities.

US-A-3 030 782 discloses a refrigerant distributor in accordance with the preamble of claim 1.

An object of the present invention is to provide a distributor that achieves uniform mixture of gas-liquid two-phase refrigerant to improve uniform distribution performance to a plurality of distributing tubes.

Another object of the present invention is to provide a distributor that is free of brazing defects and has higher assembly reliability.

A further object of the present invention is to provide a method of fabricating a distributor that achieves uniform mixture of gas-liquid two-phase refrigerant to improve uniform distribution performance to a plurality of distributing tubes.

An even further object of the present invention is to provide a method of fabricating a distributor that is free of brazing defects at the time of assembly and exhibits excellent mass productivity.

The present invention provides a refrigerant distributor as set forth in claim 1.

In a refrigerant distributor according to the present invention the distribution body comprises a tube joint member, a cover member that covers one side of the tube joint member to form a mixing cavity therebetween, and a refrigerant supply tube is inserted into a through hole formed through the tube joint member, and a plurality of distributing tubes are inserted into through holes formed through the tube joint member; the refrigerant supply tube and the plurality of distributing tubes are interconnected within the mixing cavity.

In the distributor of the present invention, the refrigerant supply tube allows gas-liquid two-phase refrigerant to flow rapidly into the mixing cavity and to collide against the opposite wall of the mixing cavity, and then, the refrigerant dispersed in the mist state in the cavity can be discharged uniformly to each of the distributing tubes.

In particular, it is desirable that the refrigerant supply tube may be disposed at the center position of the tube joint member and the distributing tubes are disposed rotatably symmetrically around the axis of the refrigerant supply tube.

In a preferred embodiment of the refrigerant distributor, the supply tube and distributing tubes are brazed water-tightly with the tube joint member. In such a distributor, entry of the brazing material into the mixing cavity during brazing operation may be prevented structurally as follows. That is, the present refrigerant distributor may preferably have braze stopping sections for stopping the brazing material into the mixing cavity which are disposed at the edge on the mixing cavity side of the through holes of the tube joint member. The braze stopping sections have preferably the through hole edge flared in a taper form and, for example, edges of the supply tube and distributing tubes are allowed to pass through the flared section as in the case of chamfering. This is intended to stop the entry of brazing material from the through hole edge into the mixing cavity by capillary force.

In addition, the refrigerant distributor is intended to stop the entry of brazing material from the edge of the joining section into the mixing cavity by a press-fit section provided in the joining section where the tube joint member and the cover member are fitted together, the press-fit section being disposed at the edge of the joining section on the mixing cavity side.

The present invention includes a method for fabricating a refrigerant distributor, which comprises: covering one surface of the tube joint member with a plurality of through holes placed with the covering member for forming a mixing cavity with the tube joint member; carrying out temporary assembly by inserting the refrigerant supply tube and a plurality of distributing tubes into the through holes of the tube joint member in the same direction; and brazing joining sections between the tube joint member and the cover member and the joining sections'between the tube joint member and refrigerant supply tube and between the tube joint member and a plurality of distributing tubes.

In the fabricating method according to the present invention, an induction brazing technique is applied for brazing joining sections in a temporary assembled distributor. In this brazing method, the brazing material is placed at a joining section at the nearly center of the tube joint member and a plurality of brazing sections on the periphery thereof, the tube joint member is placed inside the induction coil, and these brazing sections are brazed by induction-heating the periphery of the brazing base material, which is a tube joint member of a temporary assembly distributor.

In particular, the solidus temperature of the brazing material of the central through hole preferably may be set lower than that of the brazing material for the periphery through holes so that brazing at the center section takes place more quickly during the induction-heating operation of the distributor.

A brazed section comprises an through hole open to the tube joint member and an insertion tube such as a supply tubes to be inserted and brazed a clearance between the through hole and the insertion tube therein, and a configuration in which the brazing material is placed around the opening of the through hole may preferably be accepted.

Namely, the method according to the present invention more specifically comprises inserting a supply tube formed through nearly a center of the tube joint member and distributing tubes into a plurality of through holes formed though the periphery of the tube joint member, respectively, disposing the brazing material around each of the through holes on the tube joint member, induction-heating the outer-peripheral section of the cover member, and brazing the cover member to the tube joint member and the above tubes to the tube joint member. In the method, the brazing material of the center through hole is chosen from those with solidus point lower than that of the brazing material of the periphery through holes.

The tube joint member may preferably have tapered surfaces formed around the openings of the through holes and grooves for embedding brazing material disposed between the taper surface and the insertion member.

In practicing the method for fabricating the refrigerant distributor, the brazing method is preferably carried out by arranging a temporary assembly distributor coaxially inside an induction coil using a non-conductive, temporary assembly holding means equipped with a member receiving section capable of removably placing the bottom section of the tube joint member of the distributor and a coil holding section for fixing the induction coil.

The brazing method desirably may use an air-tight chamber for fixing the temporary assembly holding means and the induction coil held in the coil holding section inside the air-tight chamber, and by this contrivance, brazing by induction-heating is able to be carried out in the controlled atmosphere.

A brazing equipment may contain an air-tight chamber, and it is desirable that the air-tight chamber accommodates and fixes the temporary assembly holding means and the induction coil held to the coil holding section, and brazing by induction-heating takes place in the controlled atmosphere.

The brazing equipment is desirably equipped with an tube supporter for supporting the upper part of the tubes erectly disposed by inserting the tubes into an through hole open to the tube joint member, and it is coaxially positioned to the through hole of the cover member.

The present invention will now be described as follows, by way of example, in more detail referring to the following accompanying drawings, in which:
Fig. 1 is a cross-sectional view showing a refrigerant distributor according to an embodiment of the present invention;
Fig. 2 is a perspective view showing a refrigerant distributor according to an embodiment of the present invention;
Fig. 3 is a partially cross-sectional view showing a refrigerant tube concerning an embodiment according to the present invention;
Fig. 4 is a cross-sectional view showing a refrigerant distributor with a refrigerant flow indicated, according to an embodiment of the present invention;
Fig. 5 is a cross-sectional view showing a refrigerant distributor having a step provided around an inside wall of the cover member according to an embodiment of the present invention;
Fig. 6 is a cross-sectional view showing a refrigerant distributor having braze stopping sections according to an embodiment of the present invention;
Fig. 7 is a cross-sectional view showing a refrigerant distributor according to an embodiment of the present invention;
Fig. 8 is a cross-sectional view showing a refrigerant distributor according to an embodiment of the present invention;
Fig. 9 is a cross-sectional view showing the structure of a refrigerant distributor according to an embodiment of the present invention;
Fig. 10A is a cross-sectional view showing a refrigerant distributor and induction coil when the refrigerant distributor is joined to the piping by induction brazing;
Fig. 10B is a cross-sectional view showing a heat flow of a refrigerant distributor when the refrigerant distributor is joined to the piping by induction brazing;
Fig. 11 is a diagram showing the relation between temperature of the joined portion by the induction brazing method and the coil energizing time;
Fig. 12A is a top view showing the positional relationship between the refrigerant distributor to which the supply tube and the distributing tubes are brazed and the induction coil in he fabricating method related to the embodiment of the present invention;
Fig. 12B is a cross-sectional view of the refrigerant distributor and the induction coil shown in Fig. 12A;
Fig. 13 is a graph showing the relation between temperature of each brazed section during the brazing process and the coil energizing time according to the embodiment of the present invention.
Fig. 14 is a cross-sectional view showing the refrigerant distributor before brazing in the method related to the embodiment of the present invention:
Figs. 15A and 15B are a top view and a longitudinal cross-sectional view, respectively, showing the disposition for the refrigerant distributor utilizing a temporary assembly holding means related to the embodiment of the present invention;
Fig. 16 is a cross-sectional view of a brazing equipment with the temporary assembly holding means and induction coil fixed inside the chamber related to the embodiment of the present invention;
Fig. 17 is a cross-sectional view showing a brazing equipment with the temporary assembly holding means and induction coil fixed inside the chamber related to the embodiment of the present invention;
Fig. 18 shows a refrigerant circuit diagram of an air-conditioner; and
Fig. 19 is a cross-sectional view showing a conventional refrigerant distributor.

The refrigerant distributor according to the present invention utilizes a space between the tube joint member and the cover member that covers one surface of the tube joint member as a mixing cavity. One refrigerant supply tube is inserted and fixed into a through hole formed through the tube joint member to be in communication with the mixing cavity, and allows a gas-liquid phase refrigerant to flow into the mixing cavity. A plurality of distributing tubes are inserted into through holes through the tube joint member, are in communication with the mixing cavity, and distribute and discharge the uniform gas-liquid refrigerant mixed in the mixing cavity.

The refrigerant supply tube is joined to the refrigerant pipe which is connected to a pressure reducer in a regrigerant circuit for an air conditioner, and guides the refrigerant from the pressure reducer to the mixing cavity. The plurality of refrigerant tubes are connected to corresponding evaporator pipes disposed inside a evaporator, respectively, to homogenize the refrigerant with gas and liquid phases in the mixing cavity and deliver them to each of the evaporator pipes.

In the mixing cavity, the refrigerant is discharged from the refrigerant supply tube into the mixing cavity to collide against the inner wall surface of the mixing cavity, uniformly dispersed with gas and liquid, and delivered as a perfectly mixed refrigerant into each of the distributing tubes equally.

Because the mixing cavity uniformly is necessary to disperse the gas and the liquid of the refrigerant by the impact at the wall surface, the flow rate of the refrigerant must be increased enough to break out the separation of a liquid phase from the gas phase by collision, and for this purpose, must be larger comparable with the volume of the cavity.

The uniformly dispersed refrigerant in the cavity must be uniformly supplied to the plurality of distributing tubes equally, and therefore, the distributing tubes are preferably disposed symmetrically with respect to the refrigerant supply tube.

Consequently, one preferable embodiment is to shape the mixing cavity in a cylindrical or discal form in the refrigerant distributor, and an end of the refrigerant supply tube and ends of the plurality of distributing tubes surrounding around the supply tube may be disposed open to the discal inner surface in the cavity. The refrigerant discharged from the end of the refrigerant supply tube collides against other opposite discal surfaces in the mixing cavity to mix the gas and the liquid uniformly, and simultaneously moves uniformly in the radial direction. The uniform, gas-liquid mixed refrigerant in the mixing cavity is able to move in the distributing tubes via the end of the plurality of distributing tubes.

The following examples show examples of arrangements of refrigerant supply tube and a plurality of distributing tube surrounding therearound, but the distributor of the present invention should not be limited to this.

### Embodiment 1

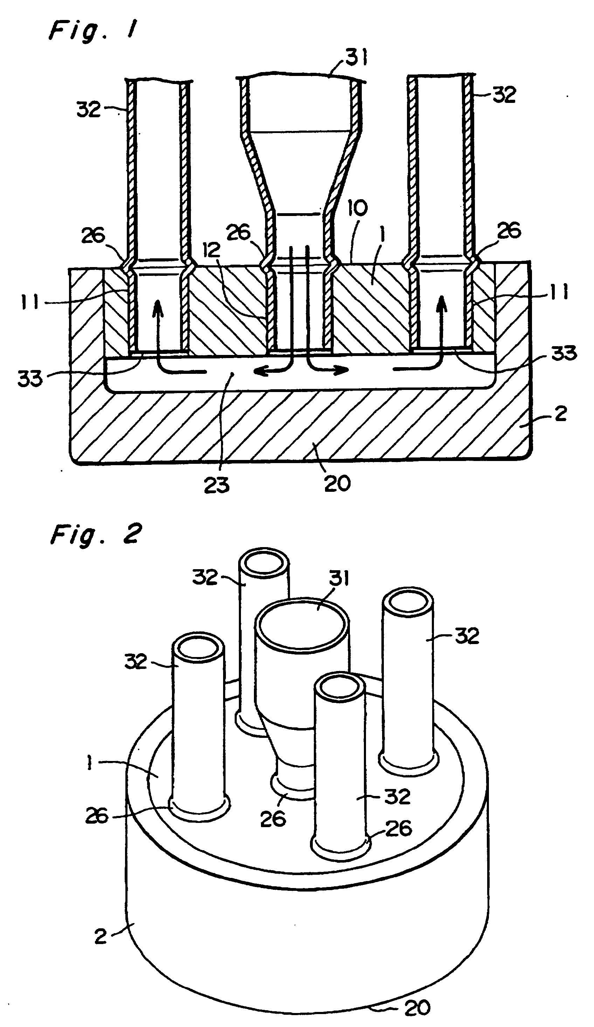

In Figs. 1 and 2, a tube joint member 1 is of a disc form with a center through hole 12 and a plurality of holes 11 disposed around the center hole 12, and a refrigerant supply tube 31 is inserted and fixed in the center hole 12 and a plurality of the distributing tubes 32 is inserted into the plurality of holes 11. A cover member 2 of a cylindrical container form with a shallow bottom accepts the tube joint member 1 inside. A narrow inside of its opening. Space is disposed between the tube joint member 1 and the cover member 2, which space forms a mixing cavity 23 for mixing the refrigerant in the gas-liquid phase state. The refrigerant supply tube 31 supplies refrigerant in the gas-liquid two-phase state into the cavity 23 and the plurality of distributing tubes 32 carry the gas-liquid refrigerant from the cavity.

As the volume of the mixing cavity 23 increases, the supplied refrigerant from the supply tube 31 lowers in flow rate in the cavity, and then, there is a risk of separating the mixed refrigerant again into gas and liquid, and as a measure, the volume of the mixing cavity 23 is preferably less than 6 mm³ per 1 kg/h of refrigerant circulation rate. For example, the distributor whose refrigerant circulation rate is 150 kg/h may preferably have the mixing cavity volume of 900 mm³ or less.

In the present embodiment, the refrigerant supply tube 31 may have a throttle section formed with a narrower diameter of the lower end section than the upper section of the supply tube. With an increase in flow rate in the reduced section (throttle section) of the refrigerant supply tube 31, the flow of the gas-liquid phase refrigerant is discharged at a higher speed into the mixing cavity 23 in which gas and liquid are mixed well to a certain extent. In the mixing cavity 23, the refrigerant flowing into the mixing cavity from the refrigerant supply tube 31 collides against the wall surface of the cover member 2, thereby allowing the gaseous refrigerant to mix with the liquid refrigerant more, and a mixture condition in which fine liquid particles dispersed in the gas phase is generated. The refrigerant with gas and liquid thoroughly mixed moves to the distributing tube 32 along the wall surface of the cover member 2, passes the distributing tube, and flows out to the outside of the distributor.

Even if the refrigerant is unable to have gas and liquid thoroughly mixed at the throttle section of the refrigerant supply tube 31, and flows into the mixing cavity with the liquid phase and the gas phase unbalanced, gas and liquid can be mixed positively by collisions of the refrigerant against the cavity wall surface, and to the distributing tube 25, the refrigerant with gas and liquid positively mixed is sent. Consequently, no problem of degraded distribution performance occurs.

In addition, a plurality of distributing tubes 32 should preferably be disposed around the refrigerant supply tube 31 by inserting parallel to each other in the same direction. This is because the number of distributing tubes can be increased by expanding the mixing cavity in the radial direction. In particular, disposing the distributing tubes parallel to each other is preferable from the viewpoint of equally distributing the uniform gas-liquid mixture refrigerant. This kind of disposition enables the extension of distributing tubes in the same refrigerant circuit, and the design of the refrigerant circuit is not limited by the number of distributions.

A refrigerant supply tube 31 and a plurality of the distributing tubes 32 may be disposed to different members, for example, one is disposed to the tube joint member 1 and the other to the cover member, but preferably, the plurality of distributing tubes 32 and the refrigerant supply tube 31 are disposed in the same direction to the tube joint member 1. This configuration of the tubes simplifies the part structure, makes the brazing and other working operations easy, and simplifies the fabricating process.

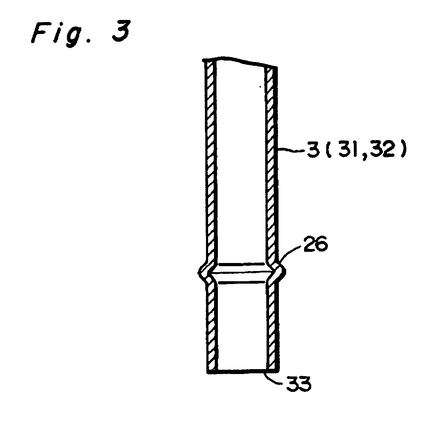

As shown in Fig. 3, the refrigerant supply tube 31 and the distributing tube 32 may preferably be equipped with an overhang section 26 with a part of the tube expanded in a specified distance from the end 33. The overhang section 26 specifies the insertion length of the refrigerant supply tube 31 and the distributing tube 32 in the through-thickness direction of the tube joint member 21, and this makes it easier to position the tube end 23 with respect to the tube joint member, and the volume of the mixing cavity is free of variation, and a distributor which is difficult to cause gas-liquid separation of the refrigerant is able to be obtained.

### Embodiment 2.

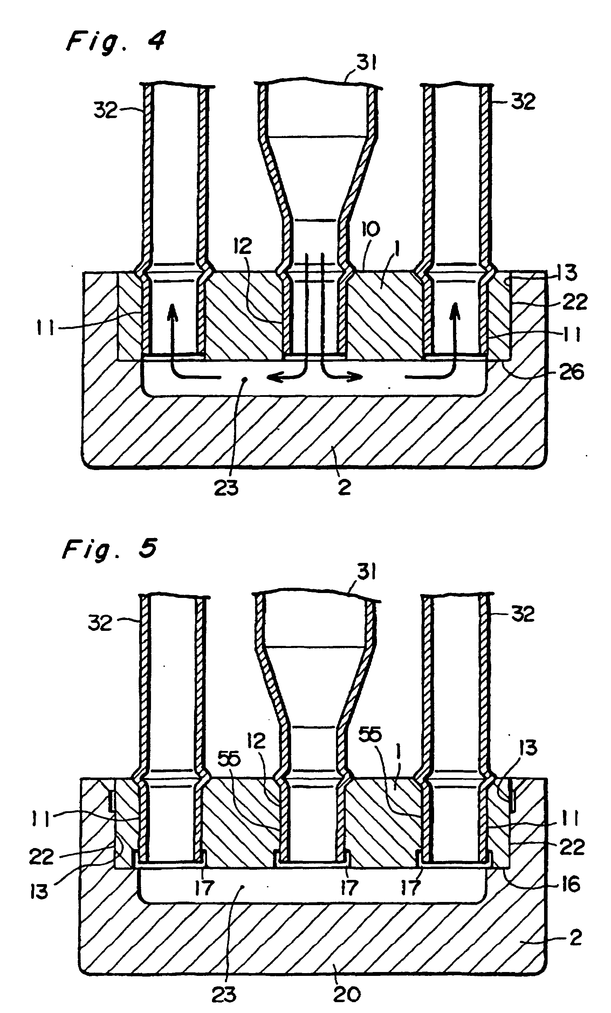

Fig. 4 is a cross-sectional view showing the refrigerant distributor according to the embodiment 2 of the present invention. In Fig. 4, reference numeral 22 designates the cover member to which the tube joint member 1 is inserted in the form of blank cap, where step is provided in the side wall of the cover member 2 and the insertion allowance of the tube joint member 1 is defined in such a manner that the insertion position of the tube joint member 1 is constantly located at the position of the step.

As described above, according to the refrigerant distributor of this embodiment, a distributor free of gas-liquid separation is able to be obtained because the insertion allowance of the tube joint member 1 in the cover member 2 and the volume of the mixing cavity 23 is held constantly to a specified volume.

The following shows an example of the distributor which is equipped with a structure for preventing the molten brazing material from going over the joining section 55 and entering the mixing cavity 23. In Fig. 5, at the ends of the through hole 12 for the refrigerant supply tube on the tube joint member 1 and the through hole 11 for the distributing tube, braze stopping sections 17 are disposed. The braze stopping section 17 has a diameter greater that including the maximum brazing clearance formed by inserting the refrigerant supply tube 31 and the distributing tube 32 into the refrigerant supply tube through hole 12 and the distributing tube through hole 11 so that a considerable clearance is able to be formed. In this example, the maximum inside diameter of the braze stopping section is the size more than 1 mm added to the outside diameter of the refrigerant supply tube 31 and the distributing tube 32.

At the time of assembly, after the tube joint member 1 is inserted into the cover member 2, the refrigerant supply tube 31 and a plurality of distributing tube 32 are inserted in the same direction, respectively, for temporary assembly, they are joined by brazing, respectively. In such event, the molten brazing material enters the joining section 55 between the refrigerant supply tube 31 and the through hole 12 and the joining section 55 between the distributing tube 32 and the through hole 11 by capillary force. And the brazing material entering the braze stopping section 17 at the head end suddenly loses the capillary force by the wide clearance at the braze stopping section 17 and the further entry of the brazing material is stopped.

As described above, the refrigerant distributor of this example prevents deformation of the mixing cavity and clogging of the refrigerant supply tube 31 and the distributing tube 32 caused by the entry and the solidification of the brazing material in the mixing cavity 23 through the brazing clearance between the refrigerant supply tube 31 and the refrigerant supply tube through hole 12 as well as the distributing tube 32 and the distributing tube through hole 11 due to overheating or oversupply of the brazing material, and this can provide a distributor with high distribution performance.

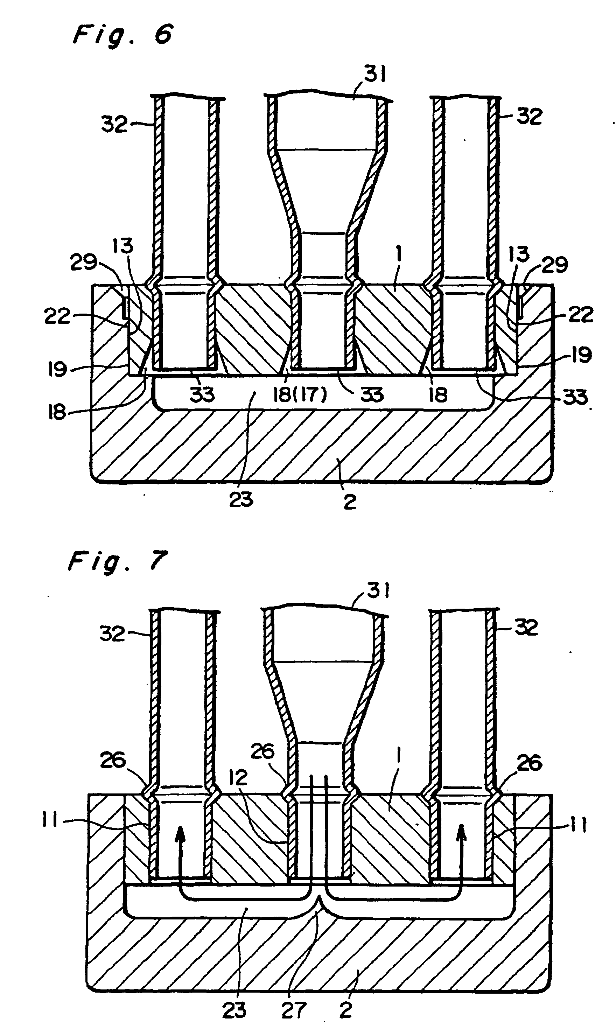

Fig. 6 shows the braze stopping section 17 of another example of this embodiment. In the figures, the braze stopping section 47 has the end sections of the refrigerant supply tube through hole 12 and the distributing tube through hole 11 made into tapered stop sections 18. Because by forming the profile into a tapered form, the brazing clearance increases gradually, the sudden reduction of capillary force is alleviated, but since it is processed to a tapered form, it has an advantage of utilizing chamfering. The advantage is that the tapered form is able to be processed with a comparatively popular machine such as a drilling machine.

The tube joint member 1 and the cover member may be fixed by crimping. In this example, in Fig. 6, on the outer circumference 13 of the tube joint member 1, an inner peripheral surface 22 formed by the cover member 2 that accepts this is press-squeezed to form a press-fit section 19. A plurality of distributing tubes 32 and the refrigerant supply tube 31 are inserted in the axial direction of the tube joint member 1, respectively and the joining section of the tube joint member 1 and the cover member 2 are joined by torch brazing, induction-heating, etc. In such event, the brazing material entering the brazing material entering section 42 disposed at the cover member 2 stops entering at the press-fit section 19.

As described above, since according to the refrigerant distributor of the embodiment 5, it becomes possible to suppress deformation of the profile of the mixing cavity caused by the solidification of the brazing material in the mixing cavity 23 which enters from the brazing clearance between the cover member 2 and the tube joint member 1 due to overheating or oversupply of the brazing material, a distributor with high distribution performance is able to be obtained.

In the above embodiment, the press-fit section 19 was disposed at part of the joining section of the cover member 2, but it may be disposed at part of the joining section of the cover member 2 of the tube joint member 1.

### Embodiment 3

This embodiment intends to stabilize the flow of refrigerant discharged form the refrigerant supply tube 31 to the mixing cavity and to support uniform supply to a plurality of distributing tubes 32.

In the first example, in Fig. 7, the cover member has a convexly curved projection 27 on the wall surface of the mixing cavity 23 opposite to the pipe end 33 of the refrigerant supply tube 31. In this example, the projection 27 is made conical. The arrow mark in Fig. 7 shows the refrigerant flow direction. The refrigerant flowing in from he refrigerant supply tube 31 first collides against the projection 27, passes in the mixing cavity 23, and is distributed to distributing tubes 32.

Because the refrigerant distributor equipped with a projected baffle allows the refrigerant flowing in from the refrigerant supply tube 31 to first collide against the top end of the projection 27 and advance towards the root of the projection 27 in a fanning out form, impacts at the time of collision can be alleviated. Since with this contrivance, the noise generated when air bubbles in the refrigerant collide can be suppressed, a distributor with high distribution performance and less refrigerant noise generation can be obtained.

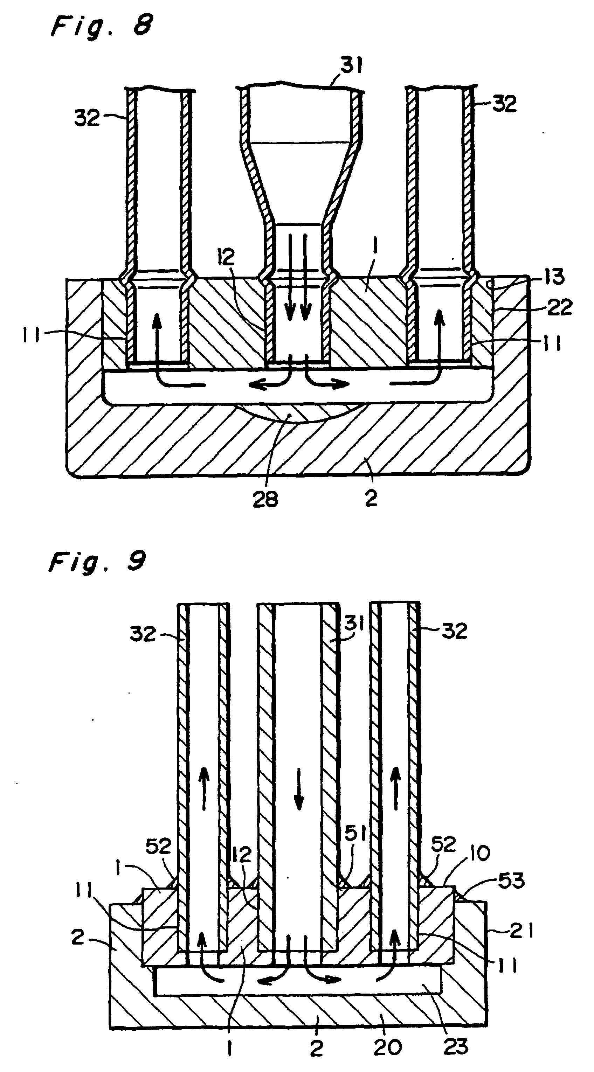

In another example shown in Fig. 8, the cover member has the cushioning material 44 formed with metal sintered compact, etc. on the wall surface of the mixing cavity 23 opposite to the refrigerant supply tube 31. The refrigerant in the gas-liquid two-phase state flows in the cover member 43 through the refrigerant supply tube 31 and collides against the cushioning material 44. In such event, air bubbles in the gas-liquid two-phase refrigerant come in contact with the cushioning material 44, which absorbs the refrigerant noise generated when air bubbles burst. Thereafter, the refrigerant disperses along the peripheral direction of the mixing cavity 23, passes through the distributing tubes 32, and flows out to the outside of the distributor.

As described above, because in such refrigerant distributor, the refrigerant in the gas-liquid two-phase state is allowed to collide against the wall surface of the mixing cavity 23, gas-liquid mixture is able to be positively carried out, and furthermore, because the sound generated when air bubbles in the refrigerant collide against the wall surface of the mixing cavity 23 can be suppressed with the cushioning material 44 installed to the section where the refrigerant collides, a distributor with high distribution performance and less refrigerant noise generation can be obtained.

### Embodiment 4. Fabricating Method

Now, the description will be made on the fabricating method of the refrigerant distributor according to the present invention. First of all, the tube joint member 1 and the cover member 2 are fabricated by plastic working such as grinding, drawing, forging, etc., and a plurality of through holes disposed in parallel to the axial direction of the cylindrical tube joint member 1 are formed. A plurality of distributing tubes and refrigerant supply tube are prepared. These tube joint member 1 and the cover member 2 and pipe material are formed from copper or copper alloys.

The tube joint member 1 is inserted into the cover member 2, the refrigerant supply tube 31 and a plurality of distributing tubes 32 are inserted in the same direction, respectively so that a plurality of distributing tubes 32 are disposed concentrically around the refrigerant supply tube 31 and coaxially with refrigerant supply tubes 31, and temporary assembly is carried out. To the refrigerant supply tube 31 and distributing tubes 32, an overhang section 26 jutting out in the outside diameter direction is disposed in advance, respectively, to specify the insertion allowance from one end of refrigerant supply tubes 31 and distributing tubes 32 (Fig. 3 shows the distributing tube).

The parts temporarily assembled in this way are brazed to be joined by torch heating or induction hating. Preferably, brazing by induction heating should be adopted.

Brazing by flame utilizing a torch is not suited to uniformly heating the joining section because the joining section has a structure with many pipe materials involved. The use of resistance heating furnace is suited for uniform heating and achieves high brazing performance, but has a drawback of long heating time required, whereas induction brazing has an advantage of achieving brazing in a short time.

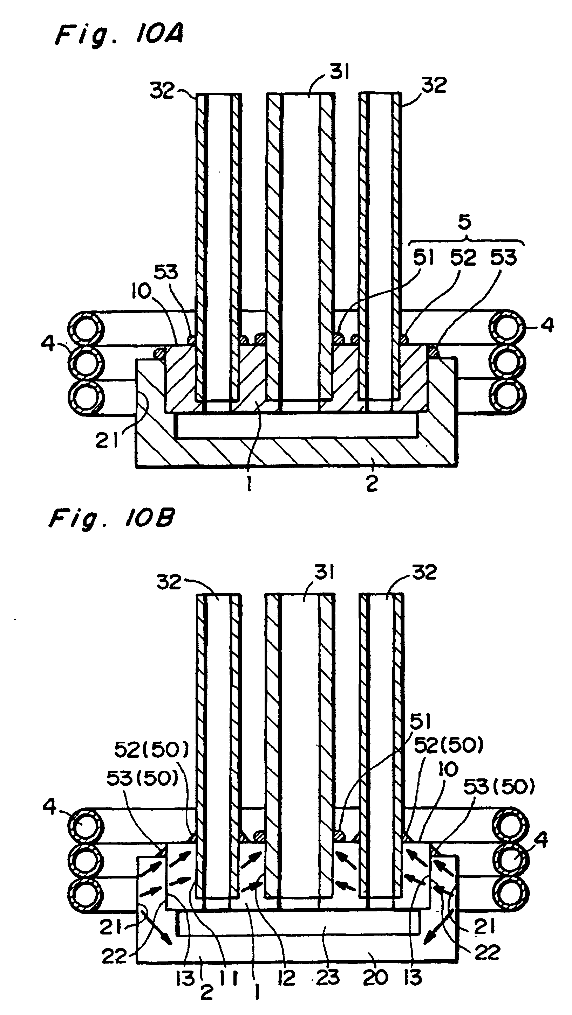

For the assembly of this distributor, as shown in Fig. 9, for members composing the distributor, copper of the conductive material is used and induction brazing is able to be adopted. Prior to the assembly, as shown in Figs. 10A, B, to the tube joint member 1, an through hole 12 is disposed at the center and a plurality of through holes 11 on the periphery, and the refrigerant supply tube 31 is inserted in the through hole 12 at the center and a plurality of distributing tubes 32 are inserted into through holes 11 on the periphery, and to the vicinity of each through hole, the brazing material 5 (51, 52) is disposed. In addition, the cover member 2 is fitted over the outer peripheral side of the tube joint member 1, and to the tube joint member 1, brazing material 5 (53) is disposed at the outer-peripheral section and the vicinity of the through hole.

In Fig. 10A, the temporarily assembled distributor is placed on a mounting bed (not illustrated) made of insulator with heat-resistance such as ceramics, etc. and is disposed inside the annular induction coil 4. In such event, the induction coil 4 is disposed on the horizontal level nearly same as the rim of the tube joint member 1 of through holes 11, 12 of the brazing section.

At the time of brazing, as shown in Figs. 10A and 10B, high-frequency current is allowed to flow in the induction coil 4, and the surface layer of the outer-peripheral section 21 of the cover member 2 formed from copper is first heated by the skin effect of high-frequency induction current, and the heat moves as shown by arrows, and the brazing material 53 between the cover member 2 and the tube joint member 1 melts to form a fillet 50. Melting the brazing material 53 on the cover member side causes the brazing material to penetrate and fill the brazing clearance between the outer peripheral surface 13 of the tube joint member 1 and the inner peripheral surface 22 of the cover member 2, the heat conducting path to the tube joint member 1 expands, and heat conduction is promoted from the periphery of the tube joint member 1 towards the center. In this process, the brazing material 52 installed to the distributing tube 32 at the periphery of the tube joint member 1 first melts and forms a fillet 50, and at the same time, part of the molten brazing material penetrates the joining section clearance between the distributing tube piping 32 and through hole 11. Then, the brazing material 51 installed around the refrigerant supply tube 31 located at the center melts and forms a fillet in the same manner, and part of it penetrates the joining section clearance with the through hole 12 at the center of the refrigerant supply tube 31, and after cooling, as shown in Fig. 9, these joining sections are firmly joined together by the fillet 50 of the brazing material.

This kind of induction brazing provides an advantage of finishing brazing work in a short time. However, since the alloy with comparatively high melting temperature which is lower than the melting point of the base material copper is used as the brazing material 5 (51-53), in the brazing process, the tube joint member 1, particularly, the periphery 21 of the cover member 2, may be overheated before the brazing material melts at the center section of the tube joint member by high-frequency induction heating, the fillet 50 of brazing material may trickle, or sometimes as the base material copper may be overheated to temperature exceeding its melting point, part of the periphery 21 of the cover member proper may melt and cause erosion defect to the distributor.

This kind of erosion defect is attributed to differences of melt initiation time of brazing material at each position because the material is heated from the peripheral surface of the cover member forming the distributing body towards the center by heat conduction in induction brazing.

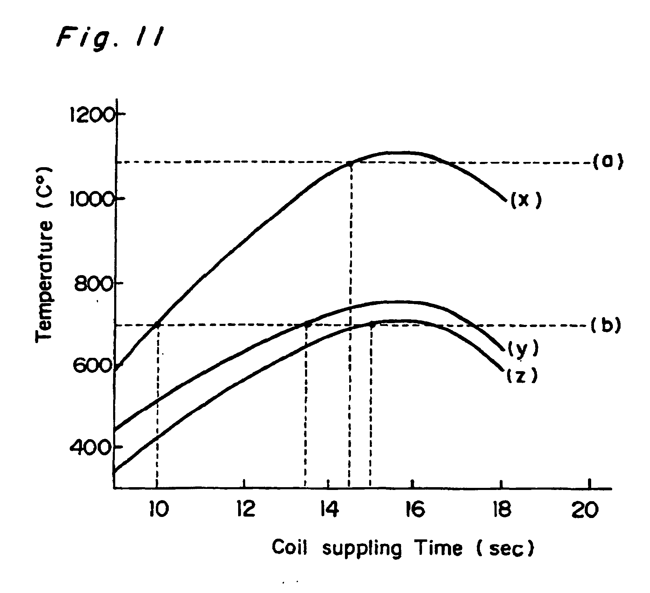

Fig. 11 plots temperature changes of the brazed section with respect to coil energizing time when brazing tests are carried out at high-frequency power supply frequency 60 kHz and coil input 200V · 16A by the use of the induction coil that is installed 4 turns of wraps around the distributor made of pure copper 26 mm in diameter and 9 mm in total thickness using phosphor copper brazing material (BCuP-2 (JIS 23264) ; solidus: 710°C; liquidus 795°C) as the brazing material 50, 51, 52. The solid line x in Fig. 11 shows a temperature at the brazed section between the tube joint member 1 and the cover member 2, y is a temperature at the brazed section around the distribution tubes 32 of the periphery, and z is the temperature around the brazed section of the supply tube 31 located at the center of the tube joint member.

In Fig. 11, 10 seconds after the coil is powered, the outermost brazing material 52 reaches 710°C, the solidus point (b), and melts, and in 13.5 seconds then the brazing material 51 reaches the solidus point (b) and melts. And 15 seconds later, the brazing material 50 reaches the solidus point (b) and melts, but the figure indicates that 14.5 seconds later before the brazing material 50 melts, the temperature of the brazed section x between the tube joint member 1 and the cover member 2 exceeds the melting point (1083°C) of base material copper. Consequently, to melt, the periphery where the brazing material melted in advance is overheated, the brazing material flows out from the brazed clearance, enters the inside of the distributor, or further the base material on the periphery melts and deforms.

It has been generally difficult to adjust the input to the induction coil or energizing time to solve this kind of problem, because the heating process from heat generation to heat conduction by induction heating takes place in a short time.

Furthermore, there are problems that must be solved for brazing. If the distribution center deviates with respect to the induction coil at the time of brazing, a difference may be generated in the clearance between the induction coil and the distributor in the peripheral direction of the distributor. Consequently, the distribution of induction current flowing in the circumference of the distributor becomes non-uniform, and the brazing material does not melt where the clearance is wide and the section with narrow clearance may be excessively heated.

In induction brazing, heating is generally carried out in the atmosphere, but in such case, part of the surface and the inside of the distributor may be oxidized.

When the brazing material of the refrigerant supply tube at the center may be melted at the time of brazing, the brazing material of the refrigerant supply tube is taken into the brazing material melted before of the distributing tube section at the periphery and shortage of brazing material occurred at the brazed section of the refrigerant supply tube.

In addition, the through hole for inserting the refrigerant supply tube and distributing tube into the tube joint member has the brazing clearance provided and the outer surface of the inserting section of the refrigerant supply tube and the distributing tube may come in non-uniform contact with the through hole inner surface disposed in the tube joint member. As a result, heat conductance from the tube joint member to the refrigerant supply tube and the distributing tube becomes non-uniform, generating a difference in the brazing material melting time.

In this embodiment, the brazing material 51 used for the center through hole 1 to which the refrigerant supply tube 31 is fixed is chosen from those with the solidus point lower than that of the brazing material 51 used for the through hole 11 of the distributing tube 32 on the periphery. By the thermal conductivity that moves from the periphery to the center by induction-heating, the brazing material 51 of the center through hole 12 and the brazing material 52 of the periphery through hole 11 are brought to finish melting, one on the heels of the other, and the melting is also accelerated to avoid erosion of the periphery of the cover member by induction-heating.

In the present invention, for the conductive metal of the tube joint member, copper or copper alloys are used, and accordingly, for the brazing material, copper alloy brazing accordingly, for the brazing material, copper alloy brazing material which melts at temperature lower than the melting point of the tube joint member may be used.

For the brazing material of the center through hole, the brazing material with solidus point difference from 25 to 200°C lower than that of the brazing material of the periphery through hole is chosen. Preferably, the solidus point of the brazing material of the center through hole is by 50-100°C lower than that of the brazing material of the periphery through hole. This kind of brazing material can be chosen from phosphor-copper braze, bronze braze, and silver braze so that the solidus point difference achieves the above-mentioned range.

In the following embodiment, a method for assembling the refrigerant distributor for the tube joint member by induction brazing will be shown. In implementing this method, the tube joint member used for the refrigerant distributor of the air-conditioner as the tube joint member includes the tube joint member 11 and the cover member 2 and in the tubes, the refrigerant supply tube and the distributing tube are included.

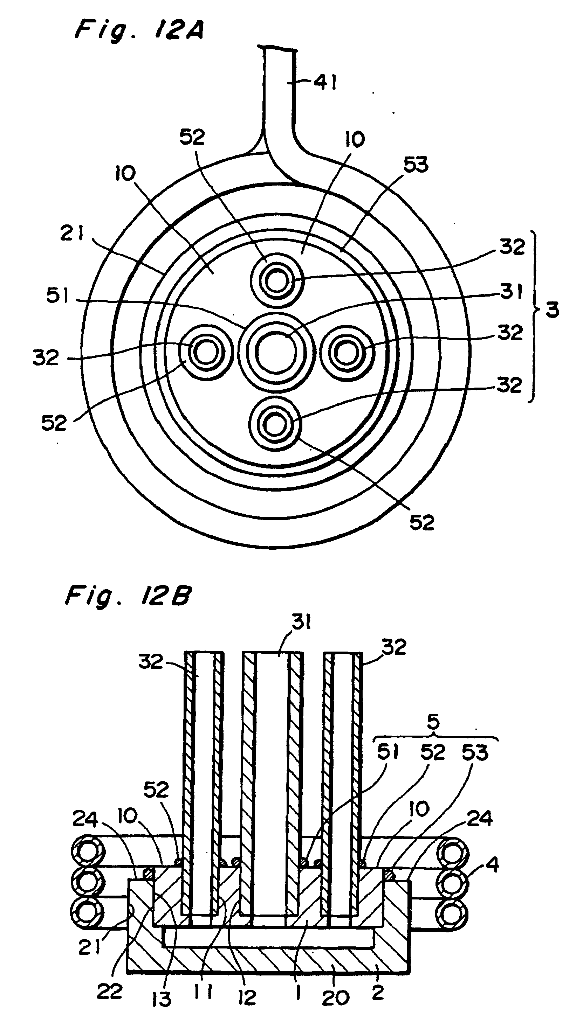

In Figs. 12A and 12B, assembly of refrigerant distributor before induction brazing according to the embodiment of the present invention is shown. The refrigerant distributor shown herein has the tube joint member 1 fitted over the cover member 2, and on the top surface of the tube joint member 1, through holes for inserting the refrigerant supply tube 31 is disposed disposed concentrically on the periphery.

Prior to brazing, at the time of temporary assembling, the discal-form tube joint member 1 is fitted into the opening of the cover member 2, which is a annular shallow container with a bottom, and at the stepped section of the container between the cover member 2 top surface 24 and the outer circumference 13 of the tube joint member 1, ring-form brazing material 53 is disposed.

The tube joint member 1 passes through the through hole 12 at the disc center and four through holes 11 on the periphery in the through-thickness direction, and inside each through hole, in this example, a stepped section is disposed for catching the pipe end.

Furthermore, to the center through hole 12 disposed in the tube joint member 1 and the periphery through hole, one piece of refrigerant supply tube 31 and four pieces of distributing tube 32 are inserted from the pipe end section, respectively, and the pipe end sections are stopped at the stepped sections of the through holes 11, 12.

On the top surface 10 of the tube joint member 1, ring-form brazing materials 51, 52 are disposed at the vicinity of openings of the center through hole 12 and periphery through hole 11, respectively, as if the brazing materials surround the supply tube 31 and the distribution pipe 32.

In this example, the cover member 2 and the tube joint member 1 that forms a refrigerant distributor are formed from pure copper, and copper pipes are also used for the refrigerant supply tube 31 and the distributing tube 32.

For the other brazing material 3, phosphor-copper is chosen from brazing materials with a melting point lower than that of the pure copper that forms the distributor and used with the joint strength taken into account.

In this embodiment, for the brazing material 52 disposed to the through hole 11 on the periphery of the refrigerant distributors and the brazing material 53 used for the stepped section, brazing material BCuP-2 (JIS Z3264) of the solidus point 710°C is used, whereas for the brazing material 51 disposed around the through hole 12 located centrally of the refrigerant, BCuP-5, a solidus point of 645°C, is used with still lower melting point.

The solidus point referred to here is the temperature at which the brazing material begins to elute the liquid from the solid in the heating process, and when the brazing materials are heated at the same conditions, that with lower temperature begins to melt earlier.

The temporarily assembled refrigerant distributor is disposed inside the induction coil 4 as shown in Figs. 12A and 12B, the induction coil 4 is energized, and the outer circumference 21 surface of the cover member 2 is heated. The Joule heat generated on the outer circumference 21 surface of the conductor conducts inside the cover member 2, and the brazing material 53 on the cover member 2 is first melted. Melting of the brazing material 53 allows the brazing material to penetrate and fill the brazing clearance between the cover member inner surface 22 and the peripheral surface 13 of the tube joint member 1, and the heat conducting path to the tube joint member 1 expands to accelerate the heat conductance to the center portion of the tube joint member 1. Then, the brazing material 52 disposed to the distributing tube 32 melts, but since the brazing material with solidus point lower than that of the brazing material 52 is used for the brazing material 51 disposed to the refrigerant supply tube 31 at the center of the tube joint member 1, at the center position, the temperature exceeds the solidus point and the brazing material melts nearly simultaneously with the brazing material 52.

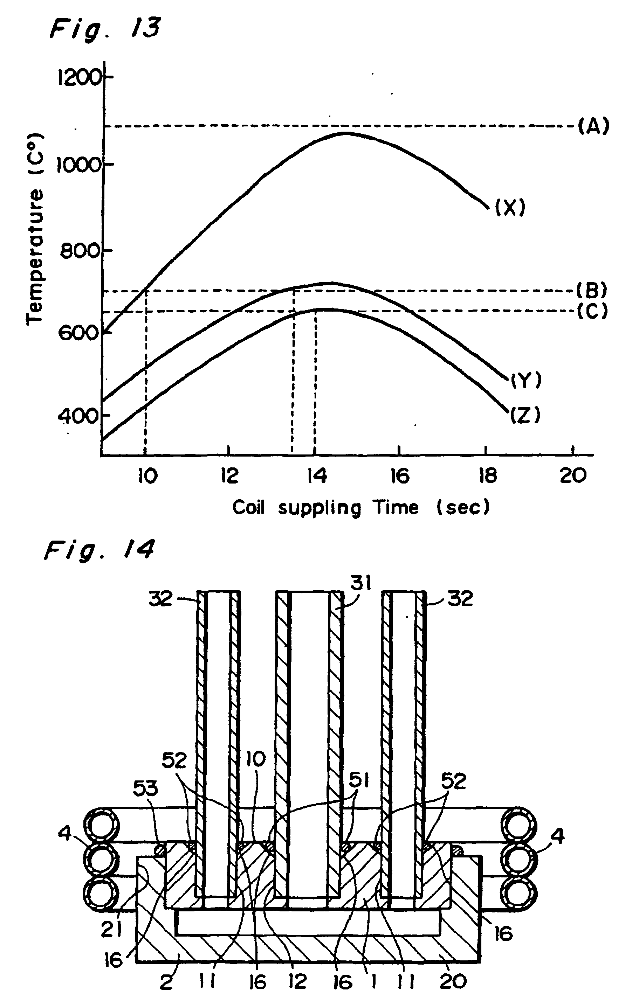

Fig. 13 shows the experimental results for brazing a distributor of 26 mm in outside diameter and 9 mm in thickness made of pure copper by using a 4-turn induction coil with input power of 200V X 16A supplied at frequency 60 kHz. In Fig. 13, a solid line X shows a temperature at a brazed section between the tube joint member 1 and cover member 2, and Y showing that at the brazed section around the distributing tube 32 at the periphery, and Z a temperature around the brazed section refrigerant of the supply tube 31, respectively. 10 seconds after the coil is excited, the temperature on the outermost brazing material 53 reaches 710°C, a solidus point (B) of the material, and melts, and then, the brazing material 52 of the periphery through hole 11 reaches the solidus point (B) 13.5 seconds later and melts. Then, after 14 seconds, the brazing material 51 of the center through hole 12 reaches 645°C, the solidus point (C), and melts, and the heating was finished 14.5 seconds later. At this end point, the greatest temperature of the brazing material 53 on the cover member at the outermost circumference section does not exceed 1083°C, the melting point of copper of the base material; therefore, no erosion of cover material 2 occurs.

As described above, according to the method of the embodiment 1, the brazing material 52 and the brazing material 51 melt nearly simultaneously after the brazing material 53 at the outer circumference section of the tube joint member 1, and the outer circumference section is not overheated, and flow-out of brazing material or melting of the base material as observed in conventional cases can be prevented.

This is the same even when the profile of the tube joint member 1 is other than cylindrical or discal, and for example, when the prismatic member is brazed, arranging brazing materials with different solidus points in accord with the distances from the outer peripheral surface to be induction-heated can prevent defective brazing.

Fig. 14 shows the refrigerant distributor before brazing. This tube joint member 1 has the opening brims of the through holes 11, 12 formed in a tapered surface, and in this figure, the groove 16 for embedding the brazing material 51 for the refrigerant supply tube 31 and the groove 16 for embedding the brazing material 52 for the distributing tube 32 are tapered.

When the opening section is tapered, and a ring-form brazing material is placed in the tapered groove 16 and is heated by the induction coil 4, the brazing material 53 melts first, and then the brazing material 52 melts, but the melted brazing material 52 does not flow out around the tapered groove 16. In addition, even when the brazing material 51 at the center melts, the tapered groove 16 prevents the brazing material from flowing out to the periphery. As described above, even when adjacent brazing materials 51, 52 are melted, the molten brazing materials 51, 52 do not come in contact with each other, and are not pulled in by brazing material 51, and in particular, shortage of braze at the brazed section of the refrigerant supply tube 31 at the center can be prevented.

### Embodiment 4

This embodiment shows the brazing equipment equipped with a temporary assembly holding means 6 for positioning the temporarily assembled refrigerant distributor coaxially in the induction coil.

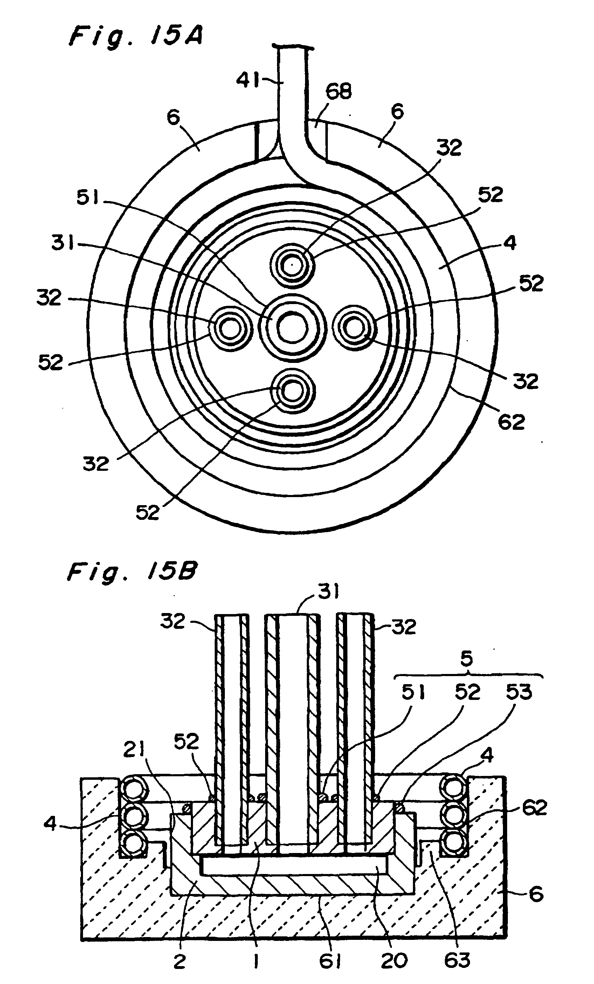

In Figs. 15A and 15B, the temporary assembly holding means 6 is formed integrally by ceramic insulators, and nearly at the center on the upper side, a member receiving section 61 with a recessed section formed for catching the outer surface of the cover member 2 is equipped. The cover member 2 is allowed to rest snugly by inserting the bottom section in the recessed section of the member receiving section 61. In addition, the temporary assembly holding means 6 is equipped with a coil holding section 62 for accommodating and fixing the induction coil in the groove on the outside of the member receiving section 16, and the member receiving section 16 and the coil holding section 62 are formed in such a manner that the cover member 2 and the induction coil 4 are disposed coaxially.

To the temporary holding means 6, the induction coil 4 is disposed and fixed beforehand, and the inner edge section 63 prevents the induction coil 4 from moving, and a notched-form coil introducing section 63 is provided to guide both ends 41, 41 of the induction coil 4, and both coil ends 41 are connected to the external power supply (not illustrated).

Now, placing the temporarily assembled refrigerant distributor at the member receiving section 61 of the temporary assembly holding means 6 can position itself coaxially with the induction coil 4. Because with this contrivance, the peripheral distribution of the high-frequency induction current generated on the surface layer of the cover member becomes uniform, and the outer circumference of the cover member 2 is uniformly heated in the peripheral direction, each brazing material 52 installed to a plurality of brazing sections of the distributing tubes 32 melts nearly simultaneously.

### Embodiment 5

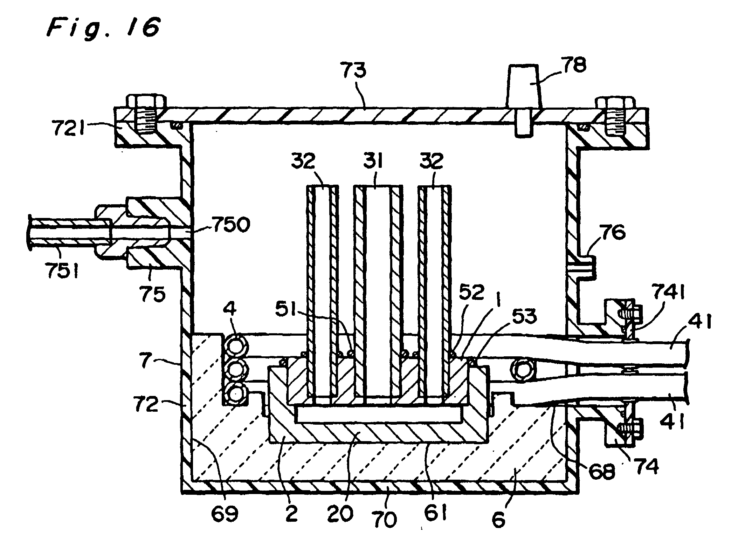

Fig. 16 shows the brazing equipment with the temporary assembly holding means arranged in an air-tight chamber 7. For the air-tight chamber 7, in the case of this example, a hollow cylindrical container proper 72 is formed with the insulation material, such as acrylic resin, which is non-conductive and, preferably, which can be seen through. In this example, for the container proper 72, a cylindrical container is utilized. On the bottom 70, the above-mentioned temporary assembly holding means 6 is accommodated. The chamber is equipped with a top lid 73, and the peripheral edge of the top lid 73 can be bolted to the top end flange section 721 of the container proper 72. The top lid 73 is opened, and the cover member, for example, the refrigerant distributor is mounted to or removed from the temporary assembly holding means, and the top lid 73 is closed and the inside of the container proper with the temporary assembly holding means equipped with a refrigerant distributor can be hermetically sealed. In addition, the container proper 72 of the chamber 7 is equipped with a through section 74 of the end section 41 of the induction coil 4, and the end section 41 and the through section are sealed with the air-tight insulation member 741.

Furthermore, the chamber 7 is equipped with a gas introducing port 750 for introducing inert gas into the container proper 72 and a small-diameter gas discharge port 76. To the gas introducing port 750, a gas supply tube 751 is connected via the introducing port joint 75, and the required inert gas, for example, nitrogen or argon gas can be supplied into the chamber 7.

In brazing operation, for the temporary assembly holding means 6 of the chamber 7, a temporarily assembled refrigerant distributor is installed, the top lid 73 is closed to hermetically seal the container, and from the introducing port 750, for example,nitrogen is supplied into the chamber. Nitrogen is introduced at a specified flow rate, and air inside the chamber is discharged from the discharge port 76, and the chamber inside is replaced with nitrogen. When the oxygen concentration of the oxygen sensor 78 installed to the top lid 73 lowers below the permissible value, high-frequency current is supplied to the coil 4 and brazing is carried out. With this contrivance, oxidation of the metal surface of the refrigerant distributor, the cover member, can be reduced and cleanliness of the brazed parts can be maintained.

### Embodiment 6

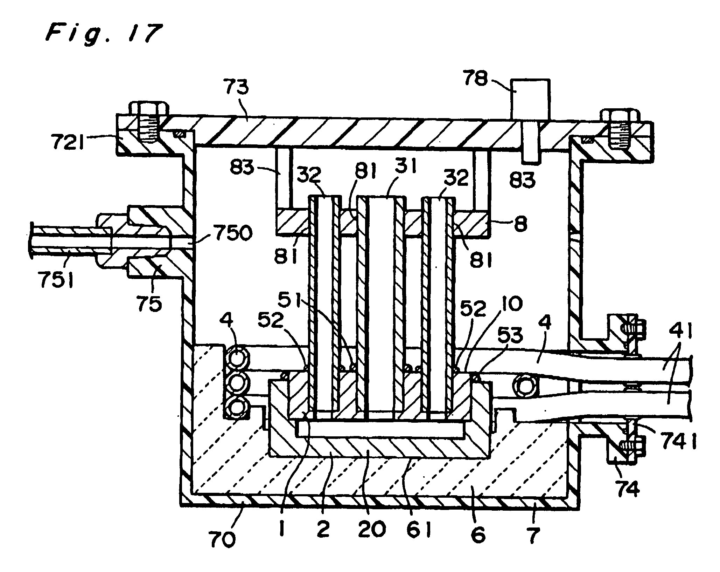

Fig. 17 shows a fixing member for holding the refrigerant supply tube 31 and the distributing tube 32 temporarily assembled to the tube joint member. The fixing member 8 is installed to the chamber lid 73 via the post 83 in this example, to which guide holes 81 for inserting to hold the refrigerant supply tube 31 and distributing tubes 32 are provided, and inserting the tops of the refrigerant supply tube 31 and the distributing tubes 32, respectively, into the guide holes can prevent the refrigerant supply tube 31 and the distributing tube 32 from displacing in the horizontal direction, and refrigerant supply tube 31 and distributing tube 32 can be disposed coaxially in the through holes of the tube joint member and at the same time in parallel with refrigerant supply tube 31 and distributing tube 32 one another.

With this fixing member, the refrigerant supply tube 31 and the distributing tubes 32 do not lean with respect to the through holes of the piping insertion parts 20 until brazing is finished, and non-uniform contact of the outer surface of the insertion section of the refrigerant supply tube 31 and the distributing tube 32 to the inner surface of the through hole provided in the tube joint member 1 can be prevented, and non-uniform heat conductance from the tube joint member 1 to the refrigerant supply tube 31 and the distributing tubes 32 is achieved, producing no difference in the melting time of the brazing material.

## Claims

1. A refrigerant distributor comprising a distributing body and a refrigerant supply tube (31) which is connected in the distributing body and a plurality of refrigerant distributing tubes (32) which are connected in the distributing body and communicated with the refrigerant supply tube, wherein the distributing body comprises a tube joint member (1) and a cover member (2) which covers one surface of the tube joint member to form a mixing cavity (23) air-tightly therebetween, the distributing tubes are inserted into through holes (11) formed through the tube joint member (1) and open to the mixing cavity, and the refrigerant supply tube (31) allows a liquid-gas refrigerant into the mixing cavity (23) to collide against the opposite wall of the mixing cavity (23) and then to flow out of the mixing cavity into the plurality of distributing tubes (32) in a uniform gas-liquid state, **characterized in that** the refrigerant supply tube (31) is inserted in a through hole (12) formed through the tube joint member (1) and open to the mixing cavity (23).

2. The refrigerant distributor according to claim 1 wherein the cover member (2) has the shape of a container having a shallow bottom to be formed with the cavity, the tube joint member being inserted into the opening of the cover member, and a step (26) is provided around the inside wall of the cover member to fit the outer edge of the tube joint member.

3. The refrigerant distributor according to claim 1 or 2, wherein at least one braze stopping section (17) for preventing brazing material from entering the mixing cavity is provided at end sections of the through holes on the mixing cavity side to stop the braze material penetrating through clearances between the through holes and the tubes by capillary force into the mixing cavity (23).

4. The refrigerant distributor according to any one of Claims 1 to 3, wherein a joining section is provided between the tube joint member and the cover member, a press-fit section (19) is provided at the end section on the mixing cavity side of the joining section, brazing material entering from the end section into the mixing cavity being stopped at the press-fit section.

5. A method for fabricating a refrigerant distributor comprising a distributing body and a refrigerant supply tube connected in the distributing body and a plurality of the refrigerant distributing tubes connected in the distributing body which communicate with the supply tube, the method comprising: covering one surface of a tube joint member having a plurality of through holes formed therethrough with a cover member to form a mixing cavity therebetweeen, in order to form a distributing body; fabricating a temporary assembled distributor by inserting a refrigerant supply tube and the plurality of refrigerant distributing tubes into the through holes formed through the tube joint member in the same direction; and brazing joining sections between the tube joint member and the cover member, between the tube joint member and the refrigerant supply tube, and between the tube joint member and the plurality of refrigerant distributing tubes.

6. The method according to claim 5, wherein brazing material is disposed near the joining sections on the surfaces of the tube joint member and the cover member located, the temporarily assembled distributor is placed inside an induction coil, and an outer peripheral section of the temporarily assembled distributor is induction-heated to braze the joining sections, the solidus point of the brazing material at the joining section for the refrigerant supply tube being set lower than that of the brazing material at the other joining sections to braze the refrigerant supply tube quickly during induction heating.

7. The method according to Claim 6, wherein the tube joint member and the cover member are formed of copper or a copper alloy, and the brazing material is a copper alloy that melts at a temperature lower than the melting point of the tube joint member.

8. The method according to Claim 6 or 7, wherein brazing in the above fabricating method is carried out by arranging the temporary assembly distributor coaxially inside the induction coil using a non-conductive, temporary assembly holding means which is equipped with a member receiving section capable of removably supporting the bottom section of the cover member of the temporary assembled distributor and with a coil holding section for fixing the induction coil.

9. An apparatus for fabricating a refrigerant distributor comprising a tube joint member having a plurality of through holes and a cover member for covering one surface of the tube joint member to form a mixing cavity therebetween, a refrigerant supply tube to be inserted into one of the through holes in the center of the tube joint member, and a plurality of distributing tubes inserted into the through holes in the periphery of the tube joint member, the apparatus comprising an induction coil (4), a non-conductive, temporary assembly holding means (6) equipped with a member receiving section (61) capable of removably placing the bottom section of the cover member, and a coil holding section (62) for fixing the induction coil, wherein a partially assembled distributor is disposed coaxially inside the induction coil, which partially assembled distributor is assembled by inserting the refrigerant supply tube (31) and the plurality of distributing tubes (32) into the corresponding through holes of the tube joint member parallel to each other in the same direction, covering the cover member (2) with the tube joint member (1), and arranging brazing material on the joining section between the tube joint member and the tubes and between the the tube joint member and the cover member.

## Patentansprüche

1. Kühlmittelverteiler, umfassend einen Verteilungskörper und eine Kühlmittelzuführungsröhre (31), die in dem Verteilungskörper verbunden ist, und eine Vielzahl von Kühlmittelverteilungsröhren (32), die in dem Verteilungskörper verbunden sind und mit der Kühlmittelzuführungsröhre kommunizieren, wobei der Verteilungskörper ein Röhrenübergangselement (1) und ein Abdeckungselement (2), das eine Oberfläche des Röhrenübergangselement abdeckt, um einen Mischhohlraum (23) luftdicht dazwischen zu bilden, umfasst, die Verteilungsröhren in Durchlöcher (11) hinein eingefügt werden, die durch das Röhrenübergangselement (1) und zu dem Mischhohlraum offen gebildet sind, und die Kühlmittelzufiihrungsröhre (31) ein Flüssiggaskühlmittel in den Mischhohlraum (23) hinein zulässt, um an die gegenüberliegende Wand des Mischhohlraums (23) zu kollidieren und dann von dem Mischhohlraum hinaus in die Vielzahl von Verteilungsröhren (32) hinein in einem gleichförmigen gasflüssigem Zustand herauszufließen, **dadurch gekennzeichnet, dass** die Kühlmittelzuführungsröhre (31) in ein Durchloch (12) eingefügt ist, das durch das Röhrenübergangselement (1) und zu dem Mischhohlraum (23) offen gebildet ist.

2. Kühlmittelverteiler nach Anspruch 1, wobei das Abdeckungselement (2) die Form eines Behälters mit einem seichten Boden, der mit dem Hohlraum gebildet werden soll, aufweist, wobei das Röhrenübergangselement in die Öffnung des Abdeckungselements hinein eingefügt ist, und eine Stufe (26) um die innere Wand des Abdeckungselements herum vorgesehen ist, um zu der äußeren Kante des Röhrenübergangselements zu passen.

3. Kühlmittelverteiler nach Anspruch 1 oder 2, wobei wenigsten ein Lötstoppabschnitt (17), um zu verhindern, dass ein Lötmaterial in den Mischhohlraum eintritt, an Endabschnitten der Durchlöcher auf der Seite des Mischhohlraums vorgesehen ist, um das Lötmaterial davor zu stoppen durch Freiräume zwischen den Löchern und den Röhren durch eine Kappilarkraft in den Mischhohlraum (23) hinein einzudringen.

4. Kühlmittelverteiler nach irgendeinem der Ansprüche 1 bis 3, wobei ein Verbindungsabschnitt zwischen dem Röhrenübergangselement und dem Abdeckungselement vorgesehen ist, ein Presspassungsabschnitt (19) an dem Endabschnitt auf der Seite des Mischhohlraums des Verbindungsabschnitts vorgesehen ist, wobei Lötmaterial, welches von dem Endabschnitt in den Mischhohlraum hinein eintritt, at dem Presspassungsabschnitt gestoppt wird.

5. Verfahren zum Herstellen eine Kühlmittelverteilers, umfassend einen Verteilungskörper und eine Kühlmittelzuführungsröhre, die in dem Verteilungskörper verbunden ist, und eine Vielzahl von Kühlmittelverteilungsröhren, die in dem Verteilungskörper verbunden sind und die mit der Zuführungsröhre kommunizieren, wobei das Verfahren die folgenden Schritte umfasst: Abdecken einer Oberfläche eines Röhrenübergangselements mit einer Vielzahl von Durchlöchern, die dadurch mit einem Abdeckungselement gebildet sind, um einen Mischhohlraum dazwischen zu bilden, um einen Verteilungskörper zu bilden; Herstellen eines vorübergehend zusammengebauten Verteilers durch Einfügen einer Kühlmittelzuführungsröhre und der Vielzahl von Kühlmittelverteilungsröhren in die Durchlöcher hinein, die durch das Röhrenübergangselement gebildet sind, in der gleichen Richtung; und Löten von Verbindungsabschnitten zwischen dem Röhrenübergangselement und dem Abdeckungselement und zwischen dem Röhrenübergangselement und der Kühlmittelzuführungsröhre und zwischen dem Röhrenübergangselement und der Vielzahl von Kühlmittelverteilungsröhren.

6. Verfahren nach Anspruch 5, wobei Lötmaterial nahe zu den Verbindungsabschnitten auf den Oberflächen des Röhrenübergangselements und des angeordneten Abdeckungselements angeordnet ist, der vorübergehend zusammengebaute Verteiler innerhalb einer Induktionsspule angeordnet wird, und ein äußerer Umfangsabschnitt des vorübergehend zusammengebauten Verteilers induktionserwärmt wird, um die Verbindungsabschnitte zu löten, wobei der Verfestigungspunkt des Lötmaterials an dem Verbindungsabschnitt für die Kühlmittelzuführungsröhre niedriger eingestellt ist als derjenige des Lötmaterials at den anderen Verbindungsabschnitten, um die Kühlmittelzuführungsröhre schnell während einer Induktionserwärmung zu löten.

7. Verfahren nach Anspruch 6, wobei das Röhrenübergangselement und das Abdeckungselement aus Kupfer oder einer Kupferlegierung gebildet sind, und das Lötmaterial eine Kupferlegierung ist, die bei einer Temperatur niedriger als der Schmelzpunkt des Röhrenübergangselements schmilzt.

8. Verfahren nach Anspruch 6 oder 7, wobei ein Löten in dem obigen Herstellungsverfahren ausgeführt wird durch Anordnen des vorübergehend zusammengebauten Verteilers koaxial innerhalb der Induktionsspule unter Verwendung einer nicht-leitenden vorübergehenden Anordnungs-Halteeinrichtung, die mit einem Elementaufnahmeabschnitt, der in der Lage ist den Bodenabschnitt des Abdeckungselements des vorübergehend zusammengebauten Verteilers entfernbar zu stützen, und einem Spulenhalteabschnitt zum Fixieren der Induktionsspule ausgerüstet ist.

9. Vorrichtung zum Herstellen eines Kühlmittelverteilers, umfassend ein Röhrenübergangselement mit einer Vielzahl von Durchlöchern und einem Abdeckungselement zum Abdecken einer Oberfläche des Röhrenübergangselements, um einen Mischhohlraum dazwischen zu bilden, eine Kühlmittelzuführungsröhre, die in eines der Durchlöcher in der Mitte des Röhrenübergangselements eingesetzt werden soll, und eine Vielzahl von Verteilungsröhren, die in die Durchlöcher hinein in dem Umfang des Röhrenübergangselements hinein eingefügt sind, wobei die Vorrichtung umfasst: eine Induktionsspule (4), eine nicht leitende vorübergehende Anordnungs-Halteeinrichtung (6), die mit einem Elementaufnahmeabschnitt (61), der in der Lage ist den Bodenabschnitt des Abdeckungselements entfernbar anzuordnen, und einem Spulenhalteabschnitt (62) zum Fixieren der Induktionsspule versehen ist, wobei ein teilweise zusammengebauter Verteiler koaxial innerhalb der Induktionsspule angeordnet ist, wobei der teilweise zusammengebaute Verteiler zusammengebaut wird durch Einfügen der Kühlmittelzuführungsröhre (31) und der Vielzahl von Verteilungsröhren (32) in die entsprechenden Durchlöcher des Röhrenübergangselements parallel zu einander in der gleichen Richtung, Abdecken des Abdeckungselements (2) mit dem Röhrenübergangselement (1) und Anordnen eines Lötmaterial auf dem Verbindungsabschnitt zwischen dem Röhrenübergangselement und den Röhren und zwischen dem Röhrenübergangselement und dem Abdeckungselement.

## Revendications

1. Distributeur de frigorigène comprenant un corps de distribution et un tube d'alimentation en frigorigène (31 ) raccordé dans le corps de distribution et une pluralité de tubes de distribution de frigorigène (32) raccordés dans le corps de distribution et communiquant avec le tube d'alimentation en frigorigène, dans lequel le corps de distribution comprend un élément d'assemblage de tubes (1) et un élément de couverture (2) qui recouvre une surface de l'élément d'assemblage de tubes pour former entre eux de manière étanche à l'air une cavité de mélange (23), les tubes de distribution sont insérés dans des trous traversants (11) formés à travers l'élément d'assemblage de tubes (1) et sont ouverts vers la cavité de mélange, et le tube d'alimentation en frigorigène (31) permet à un frigorigène liquide-gazeux dans la cavité de mélange (23) de heurter la paroi opposée de la cavité de mélange (23) et ensuite de s'écouler et de sortir de la cavité de mélange dans la pluralité de tubes de distribution (32) à un état uniforme gazeux-liquide, **caractérisé en ce que** le tube d'alimentation en frigorigène (31) est inséré dans un trou traversant (12) formé à travers l'élément d'assemblage de tubes (1) et ouvert vers la cavité de mélange (23).

2. Distributeur de frigorigène selon la revendication 1, dans lequel l'élément de couverture (2) a la forme d'un récipient possédant un fond peu profond devant être formé avec la cavité, l'élément d'assemblage de tubes étant inséré dans l'ouverture de l'élément de couverture, et un gradin (26) est disposé autour de la paroi intérieure de l'élément de couverture pour ajuster le bord extérieur de l'élément d'assemblage de tubes.

3. Distributeur de frigorigène selon la revendication 1 ou 2, dans lequel au moins une section d'arrêt de brasure (17) pour empêcher le matériau de brasage d'entrer dans la cavité de mélange est disposée au niveau des sections d'extrémité des trous traversants du côté de la cavité de mélange pour arrêter le matériau de brasage pénétrant à travers les interstices entre les trous traversants et les tubes sous l'action de la force capillaire dans la cavité de mélange (23).

4. Distributeur de frigorigène selon l'une quelconque des revendications 1 à 3, dans lequel une section d'assemblage est disposée entre l'élément d'assemblage de tubes et l'élément de couverture, une section à ajustement serré (19) est disposée au niveau de la section d'extrémité du côté de la cavité de mélange de la section d'assemblage, le matériau de brasage entrant depuis la section d'extrémité dans la cavité de mélange étant arrêté au niveau de la section à ajustement serré.

5. Procédé de fabrication d'un distributeur de frigorigène comprenant un corps de distribution et un tube d'alimentation en frigorigène raccordé dans le corps de distribution et une pluralité de tubes de distribution de frigorigène raccordés dans le corps de distribution qui communiquent avec le tube d'alimentation, le procédé comprenant les étapes consistant à: recouvrir avec un élément de couverture une surface d'un élément d'assemblage de tubes comportant une pluralité de trous traversants formés à travers celui-ci afin de former entre eux une cavité de mélange, pour former un corps de distribution; fabriquer un distributeur temporairement assemblé en insérant dans la même direction un tube d'alimentation en frigorigène et la pluralité de tubes de distribution de frigorigène dans les trous traversants formés à travers l'élément d'assemblage de tubes; et braser les sections d'assemblage entre l'élément d'assemblage de tubes et l'élément de couverture, entre l'élément d'assemblage de tubes et le tube d'alimentation en frigorigène et entre l'élément d'assemblage de tubes et la pluralité de tubes de distribution de frigorigène.

6. Procédé selon la revendication 5, dans lequel le matériau de brasage est disposé près des sections d'assemblage sur les surfaces de l'élément d'assemblage de tubes et de l'élément de couverture positionnés, le distributeur temporairement assemblé est placé à l'intérieur d'une bobine d'induction, et une section périphérique extérieure du distributeur temporairement assemblé est chauffée par induction pour braser les sections d'assemblage, le point de Solidus du matériau de brasage au niveau de la section d'assemblage du tube d'alimentation en frigorigène étant établie de façon à être inférieure à celle du matériau de brasage au niveau des autres sections d'assemblage, pour braser rapidement le tube d'alimentation en frigorigène pendant le chauffage par induction.

7. Procédé selon la revendication 6, dans lequel l'élément d'assemblage de tubes et l'élément de couverture sont réalisés à partir de cuivre ou d'un alliage de cuivre, et le matériau de brasage est un alliage de cuivre qui fond à une température inférieure au point de fusion de l'élément d'assemblage de tubes.

8. Procédé selon la revendication 6 ou 7, dans lequel le brasage dans le procédé de fabrication ci-dessus est exécuté en disposant le distributeur temporairement assemblé coaxialement à l'intérieur de la bobine d'induction en utilisant un moyen non conducteur de support d'assemblage temporaire équipé d'une section de réception d'élément capable de supporter de manière amovible la section de fond de l'élément de couverture du distributeur temporairement assemblé et d'une section de support de bobine pour fixer la bobine d'induction.

9. Dispositif de fabrication d'un distributeur de frigorigène comprenant un élément d'assemblage de tubes comportant une pluralité de trous traversants et un élément de couverture pour recouvrir une surface de l'élément d'assemblage de tubes afin de former entre eux une cavité de mélange, un tube d'alimentation en frigorigène à insérer dans l'un des trous traversants au centre de l'élément d'assemblage de tubes, et une pluralité de tubes de distribution insérés dans les trous traversants sur la périphérie de l'élément d'assemblage de tubes, le dispositif comprenant une bobine d'induction (4), un moyen non-conducteur de support d'assemblage temporaire (6) équipé d'une section de réception d'élément (61) capable de placer de manière amovible la section de fond de l'élément de couverture, et une section de support de bobine (62) pour fixer la bobine d'induction, dans lequel un distributeur partiellement assemblé est disposé coaxialement à l'intérieur de la bobine d'induction, lequel distributeur partiellement assemblé est assemblé en insérant dans la même direction le tube d'alimentation en frigorigène (31) et la pluralité de tubes de distribution (32) parallèlement les uns aux autres dans les trous traversants correspondants de l'élément d'assemblage de tubes, en recouvrant l'élément de couverture (2) avec l'élément d'assemblage de tubes (1) et en disposant un matériau de brasage sur la section d'assemblage entre l'élément d'assemblage de tubes et les tubes, et entre l'élément d'assemblage de tubes et l'élément de couverture.
